# EUROPÄISCHE PATENTSCHRIFT

(11) **EP 0 875 972 B1**
(45) Veröffentlichungstag und Bekanntmachung des Hinweises auf die Patenterteilung: **19.11.2003**
(21) Anmeldenummer: 98104893.7
(22) Anmeldetag: 18.03.1998
(51) Int. Cl.: H02B 13/065, G02B 6/24

(54) **Vorrichtung zur optischen Erfassung von Störlichtbogen in Schaltgeräten und -anlagen**
Device for optical detection of arcing in switchgear
Dispositif pour la detection des arcs dans des appareils de commutation électriques

(30) Priorität: 16.04.1997 DE 19715780
(43) Veröffentlichungstag der Anmeldung: 04.11.1998
(73) Patentinhaber: ALSTOM Sachsenwerk GmbH, 93055 Regensburg (DE)
(72) Erfinder: Jakob, Karl, Dipl.-Phys., 93049 Regensburg (DE)
(74) Vertreter: Dreiss, Fuhlendorf, Steimle & Becker

(56) Entgegenhaltungen:
- DE-A- 4 116 281
- FR-A- 2 658 920
- PATENT ABSTRACTS OF JAPAN vol. 003, no. 041 (E-103), 10. April 1979 & JP 54 020348 A (MITSUBISHI ELECTRIC CORP), 15. Februar 1979
- PATENT ABSTRACTS OF JAPAN vol. 018, no. 667 (E-1645), 15. Dezember 1994 & JP 06 261429 A (MEIDENSHA CORP), 16. September 1994
- PATENT ABSTRACTS OF JAPAN vol. 003, no. 028 (E-096), 9. März 1979 & JP 54 007144 A (MITSUBISHI ELECTRIC CORP), 19. Januar 1979
- PATENT ABSTRACTS OF JAPAN vol. 095, no. 006, 31. Juli 1995 & JP 07 059221 A (MEIDENSHA CORP), 3. März 1995
- PATENT ABSTRACTS OF JAPAN vol. 095, no. 011, 26. Dezember 1995 & JP 07 226131 A (NISSIN ELECTRIC CO LTD), 22. August 1995

## Beschreibung

Die vorliegende Erfindung bezieht sich auf eine Vorrichtung zur optischen Erfassung von Störlichtbogen in Schaltgeräten und -anlagen, insbesondere in gasisolierten Mittelspannungschaltanlagen, nach dem Oberbegriff des Anspruchs 1.

Eine Vorrichtung dieser Art ist aus Patent Abstract of Japan, Vol. 3, No. 41 (E-103), 10. April 1979 und JP 54020348 A, 15. Februar 1979 bekannt.

Diese bekannte Konstruktion lässt nicht erkennen, wie die Halterung für den optischen Detektor ausgebildet ist.

Aufgabe der vorliegenden Erfindung ist es deshalb, eine Vorrichtung zur optischen Erfassung von Störlichtbogen in Schaltgeräten und -anlagen, insbesondere in gasisolierten Mittelspannungsschaltanlagen, der eingangs genannten Art zu schaffen, die eine möglichst einfache Halterung ermöglicht.

Zur Lösung dieser Aufgabe sind bei einer Vorrichtung zur optischen Erfassung von Störlichtbogen in Schaltgeräten und -anlagen der genannten Art die im Anspruch 1 angegebenen Merkmale vorgesehen.

Durch die kuppelartige Ausgestaltung des Fensters und dessen Einbringen in den Innenraum des Schaltgerätegehäuses ergibt sich für den optischen Detektor ein sehr großer, sozusagen Rundumblickwinkel, so dass praktisch jeder an irgendeiner Stelle im Schaltgeräteinnenraum möglicherweise auftretende Störlichtbogen erfasst werden kann.

Durch die erfindungsgemäße Ausgestaltung ist erreicht, dass die Zahl der Einzelelemente für die Vorrichtung erheblich reduziert ist, da Fenster und Halterung für den optischen Detektor in einem einzigen Bauteil vereinigt sind. Weiterhin kann kann der optische Detektor innerhalb des Fensters in einfacher Weise gehalten bzw. fixiert werden. Dies macht die Montage der Vorrichtung am Schaltgerätegehäuse einfacher und schneller. Die Vorrichtung ist damit insgesamt kostengünstiger herstellbar und wirtschaftlicher einbaubar.

Eine vorteilhafte geometrische Ausgestaltung der Vorrichtung ergibt sich durch die Merkmale des Anspruchs 2.

Mit den Merkmalen gemäß Anspruch 3 ist ein schneller und einfacher Anbau der Vorrichtung an das Schaltgerätegehäuse möglich. Dabei sind zweckmäßiger Weise die Merkmale gemäß Anspruch 4 und/oder 5 vorgesehen. Dies führt einerseits zu einem gasdichten Anbau und andererseits zu einer raschen Montage.

Durch die Merkmale nach Anspruch 6 ist gleichzeitig ein einfacher Kabelanschluss für den optischen Detektor möglich.

In weiterer bevorzugter Ausgestaltung, wie sie durch die Merkmale nach Anspruch 7 verwirklicht ist, ergibt sich eine optimale Reduzierung der zu verwendenden Einzelelemente der Vorrichtung.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: im Längsschnitt den wesentlichen Teil einer Vorrichtung zur optischen Erfassung von Störlichtbogen in Schaltgeräten gemäß einem bevorzugten Ausführungsbeispiel vorliegender Erfindung,
- Figur 2: einen Schnitt längs der Linie II-II der Figur 1 und
- Figur 3: in längsgeschnittener Darstellung die Vorrichtung zur optischen Erfassung von Störlichtbogen in einem Schaltgerätegehäuse in eingebautem Zustand.

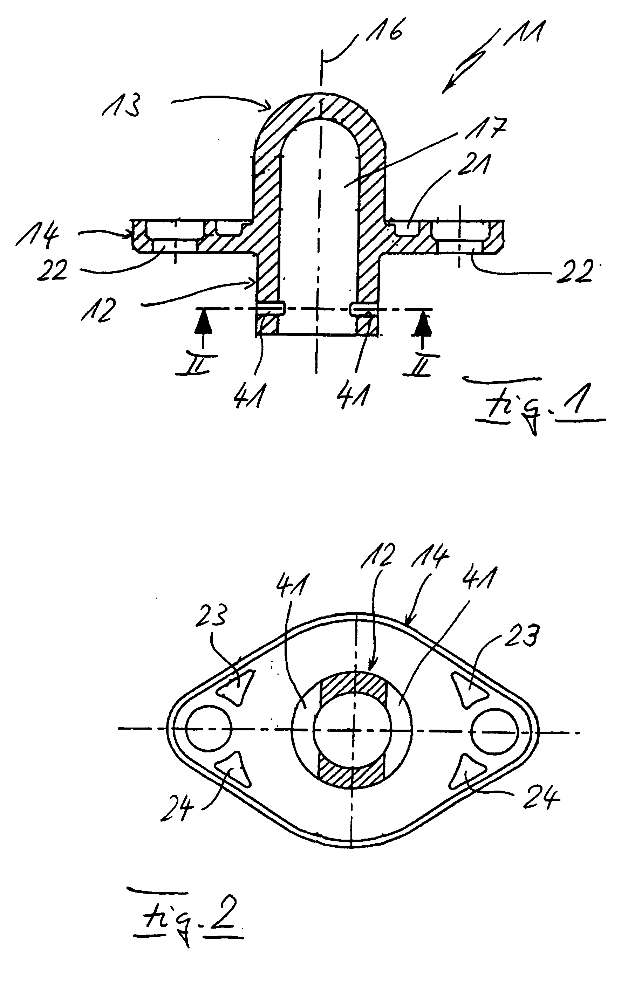

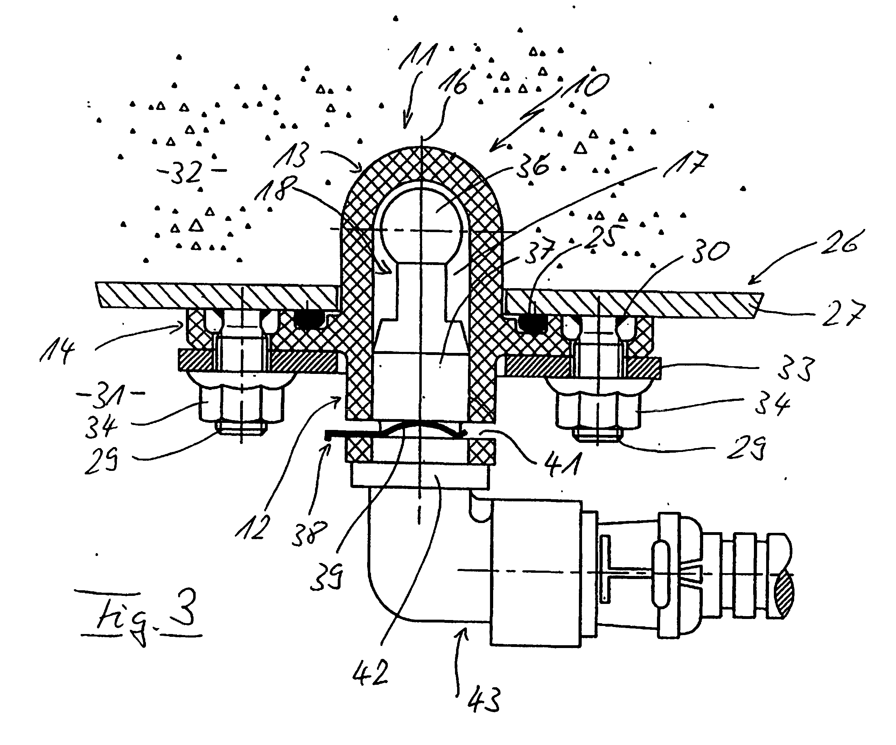

Die in der Zeichnung dargestellte Vorrichtung 10 zur optischen Erfassung von Störlichtbogen in Schaltgeräten besitzt gemäß den Figuren 1 und 2 ein Bauteil 11, das einstückig aus einem transparenten oder transluzenten Material, bspw. Kunststoff hergestellt ist. Dieses Bauteil 11 besitzt einen hinteren zylindrischen Halterungsbereich 12 und einen axial daran anschließenden domartigen bzw. halbkugelförmigen Fensterbereich 13. An einem Übergangsbereich zwischen Halterung 12 und Fenster 13 ist ein Außenflansch 14 einstückig angebracht. Das Bauteil 11 ist insgesamt um eine Achse 16 rotationssymmetrisch. Das Bauteil 11 bildet mit ihrer Halterung 12 und ihrem Fenster 13 einen vom freien Ende der Halterung 12 her offenen Aufnahmeraum 17 für einen aus Figur 3 ersichtlichen optischen Detektor 18.

Der Flansch 14 besitzt nahe der Halterung 12 bzw. dem Fenster 13 eine konzentrische Ringnut 21, die zum Fensterbereich 13 hin offen ist. An der der Halterung 12 bzw. dem Fenster 13 abgewandten Seite der Ringnut 21 ist der etwa rautenförmig ausgebildete Flansch 14 mit zwei gestuft ausgebildeten Durchgangsbohrungen 22 versehen.

Jeder der Durchgangsbohrungen 22 benachbart sind zwei Sacklochausnehmungen 23, 24 angeordnet.

Gemäß Figur 3 besitzt eine Wand 27 eines Gehäuses 26 des mit der Vorrichtung 10 zu versehenden bzw. versehenen Schaltgerätes eine kreisrunde Öffnung 28, durch die von der Außenseite, d.h. der Atmosphärenseite 31 das Bauteil 11 mit ihrem Fenster 13 derart gesteckt ist, dass das dom- bzw. kuppelartige Fenster 13 in den bspw. mit SF6 Gas gefüllten Innenraum 32 des Schaltgerätes ragt. An der Außenseite der Wand 27 sind zwei diametral gegenüberliegende Gewindestehbolzen 29 senkrecht abstehend angeschweißt, die die Durchgangsbohrungen 22 des Flansches 14 des Bauteils 11 durchdringen. Dabei ist in die Ringnut 21 des Flansches 14 eine Ringdichtung 25, bspw. in Form eines O-Ringes gelegt. Eine Scheibe 33, deren Grundfläche etwa der des Flansches 14 des Bauteils 11 entspricht, ist über die Stehbolzen 29 gesteckt und auf die Außenseite des Flansches 14 gelegt. Eine feste und gasdichte Halterung des Bauteils 11 an der Gehäusewand 27 ergibt sich durch auf die Gewindestehbolzen 29 geschraubte Muttern 34. Mit dem Anziehen der Muttern 34 wird die Ringdichtung 25 zwischen Flansch 14 und Außenseite der Gehäusewand 27 gedrückt. Die stufenartige Ausbildung der Durchgangsbohrungen 22 im Flansch 14 gewährleistet eine Aufnahme der Ringschweißnaht 30 der Gewindestehbolzen 29 im durchmessergrößeren Bereich der Durchgangsbohrungen 22.

Wie Figur 3 zu entnehmen ist, ist der optische Detektor 18 derart in den Aufnahmeraum 17 eingesetzt, dass dessen mögliche Störlichtbogen erfassender Kopf 36 im kuppelartigen Fenster 13 liegt und so eine Rundumsicht bzw. ein halbkugelförmiger Blickwinkel in den Innenraum 17 des Schaltgehäuses 26 erreicht ist. Ein Fuß 37 des Detektors 18 ist in der Halterung 12 mit Hilfe einer gabelartigen Blattfeder 38 gehalten. Die Blattfeder 38 besitzt zwei parallele Federfinger 39, die in, insbesondere aus Figur 2 ersichtliche, parallele radiale äußere Schlitze 41 in der Halterung 12 einsteckbar sind. Die Breite der radialen Schlitze 41 ist derart, dass die Federfinger 39 unter das Ende des Fußes 37 des Detektors 18 greifen und dadurch den Detektor 18 im Aufnahmeraum 17 in geeigneter Position festhalten und sichern. Durch Herausziehen der Blattfeder 38 kann der Detektor 18 in einfacher Weise aus dem offenen Ende der Halterung 12 herausgebracht und ggf. ersetzt werden. Das hintere offene Ende des Halterungsbereichs 12 ist außerdem mit einer Kupplung 42 zur Aufnahme eines Kabelanschlusses 43 für elektrische oder optische Leitungen zum und vom optischen Detektor 18 versehen.

Die Vorrichtung 10 kann in Schaltgeräte, Schaltfelder und Schaltanlagen der elektrischen Energieverteilung, insbesondere bei gasisolierte Mittelspannungschaltanlagen eingesetzt werden.

## Patentansprüche

1. Vorrichtung (10), zur optischen Erfassung von Störlichtbogen in Schaltgeräten und -anlagen, insbesondere in gasisolierten Mittelspannungsschaltanlagen, mit einem an einem Schaltgerätegehäuse (26) angeordneten Fenster (13) und mit einer dem Fenster benachbarten Halterung (12) für einen optischen Detektor (18), wobei das Fenster (13) durch ein kuppelartig in den Innenraum (32),des Schaltgerätegehäuses (26) ragendes Bauteil (11) gebildet ist, **dadurch gekennzeichnet, dass** das das Fenster (13) bildende Bauteil (11) die Halterung (12) für den optischen Detektor (18) aufweist, und dass die Halterung (12) zwei parallele, radial verlaufende Schlitze (41) zur Aufnahme federnder Haltefinger (38, 39) besitzt.

2. Vorrichtung nach Anspruch 1, **dadurch gekennzeichnet, dass** das Bauteil (11) im Bereich der außerhalb des Schaltgerätegehäuses (26) angeordneten Halterung (12) zylindrisch und im Bereich des in den Innenraum (32) des Schaltgerätegehäuses (26) ragenden Fensters (13) halbkugelförmig ist.

3. Vorrichtung nach mindestens einem der Ansprüche 1 oder 2, **dadurch gekennzeichnet, dass** das Bauteil (11) zwischen Fenster (13) und Halterung (12) einen Außenflansch (14) aufweist.

4. Vorrichtung nach Anspruch 3, **dadurch gekennzeichnet, dass** der Außenflansch (14) eine von der Seite des Fenster (13) her offene Ringnut (21) zur Einlage einer Ringdichtung (25) aufweist.

5. Vorrichtung nach Anspruch 3 oder 4, **dadurch gekennzeichnet, dass** der Außenflansch (14) jenseits der Ringnut (21) axiale Durchgangsbohrungen (22) zur Aufnahme von am Schaltgerätegehäuse (26) angeschweißten Gewindestehbolzen (29) besitzt.

6. Vorrichtung nach mindestens einem der vorhergehenden Ansprüche, **dadurch gekennzeichnet, dass** die Halterung (12) endseitig einen Kabelanschluss (43) aufweist.

7. Vorrichtung nach mindestens einem der vorhergehenden Ansprüche, **dadurch gekennzeichnet, dass** das Bauteil einstückig und aus einem einheitlichen transparenten oder transluzenten Material, vorzugsweise Kunststoff, ist.

## Claims

1. Device (10) for optical detection of arcing in switching devices and systems, in particular in gas-insulated medium-voltage switching systems, having a window (13) arranged on a switching device housing (26) and with a holder (12) adjoining the window for an optical detector (18), whereby the window (13) is formed by a dome-shaped component (11) projecting into the interior (32) of the switching device housing (26), **characterised in that** the component (11) comprising the window (13) has the holder (12) for the optical detector (18) and that the holder (12) has two parallel slits (41) running radially for accommodating sprung holder fingers (38, 39).

2. Device according to Claim 1, **characterised in that** the component (11) is cylindrical in the region of the holder (12) arranged outside the switching device housing (26) and hemispherical in the region of the window (13) projecting into the interior (32) of the switching device housing (26).

3. Device according to at least one of the claims 1 or 2, **characterised in that** the component (11) has an external flange (14) between the window (13) and the holder (12).

4. Device according to Claim 3, **characterised in that** the external flange (14) has an annular groove (21) open from the side of the window (13) for insertion of a ring-shaped seal (25).

5. Device according to Claim 3 or 4, **characterised in that** the external flange (14) has axial through bores (22) beyond the annular groove (21) for accommodating threaded stay bolts (29) welded onto the switching device housing (26).

6. Device according to at least one of the previous claims, **characterised in that** the holder (12) has a cable connection (43) on its end side.

7. Device according to at least one of the previous claims, **characterised in that** the component is made in one piece and from a uniformly transparent or translucent material, preferably plastics.

## Revendications

1. Dispositif (10) pour la détection optique des arcs dans des appareils de commutation électriques, en particulier dans des installations de commutation à tension moyenne isolées au gaz, avec une fenêtre (13) disposée sur un boîtier (26) de l'appareil de commutation et avec une fixation (12) voisine de la fenêtre pour un détecteur optique (18), la fenêtre (13) étant formée par un élément (11 ) de forme sphérique entrant dans l'espace intérieur (32) du boîtier (26) de l'appareil de commutation, **caractérisé en ce que** l'élément (11 ) formant la fenêtre (13) comporte la fixation (12) pour le détecteur optique (18) et **en ce que** la fixation (12) possède deux fentes (41 ) parallèles, se déplaçant de manière radiale, pour supporter les doigts de maintien à ressort (38, 39).

2. Dispositif selon la revendication 1, **caractérisé en ce que** l'élément (11 ) est cylindrique dans la zone de la fixation (12) disposée en dehors du boîtier (26) de l'appareil de commutation et de forme demi sphérique dans la zone de la fenêtre (13) entrant dans l'espace intérieur (32) du boîtier (26) de l'appareil de commutation.

3. Dispositif selon au moins l'une des revendications 1 ou 2, **caractérisé en ce que** l'élément (11 ) comporte une bride extérieure (14) entre la fenêtre (13) et la fixation (12).

4. Dispositif selon la revendication 3, **caractérisé en ce que** la bride extérieure (14) comporte une rainure (21) ouverte du côté de la fenêtre (13) pour y insérer un joint en anneau (25).

5. Dispositif selon la revendication 3 ou 4, **caractérisé en ce que** la bride extérieure (14) comporte, de chaque côté de la rainure (21), des trous de passage axiaux (22) pour supporter des boulons filetés (29) soudés sur le boîtier (26) de l'appareil de commutation.

6. Dispositif selon au moins l'une des revendications précédentes, **caractérisé en ce que** la fixation (12) comporte un raccord de câble (43) à son extrémité.

7. Dispositif selon au moins l'une des revendications précédentes, **caractérisé en ce que** l'élément est en une seule pièce et se compose d'un matériau transparent ou translucide spécifique, de préférence du plastique.
